# EUROPÄISCHE PATENTANMELDUNG

(11) **EP 3 593 632 A1**
(43) Veröffentlichungstag der Anmeldung: **15.01.2020**
(21) Anmeldenummer: 19185214.4
(22) Anmeldetag: 09.07.2019
(51) Int. Cl.: A01G 27/00, E04H 13/00, A47G 7/04

(54) **BEWÄSSERUNGSSYSTEM FÜR GRABSTÄTTEN**

(30) Priorität: 09.07.2018 DE 102018211314
(71) Anmelder: Stöger, Josef, 94436 Haunersdorf (DE)
(72) Erfinder: Stöger, Josef, 94436 Haunersdorf (DE)
(74) Vertreter: MERH-IP Matias Erny Reichl Hoffmann Patentanwälte PartG mbB

(57) **Zusammenfassung**

Beschrieben wird ein System zur Bewässerung von Grabstätten, aufweisend: einen Tank 3 mit einer Einfüllöffnung und einem Auslass 7, eine verstellbare Halterung 2 zur Befestigung des Tanks 3 an einer ersten Seite eines Grabsteins 6 und mit dem Auslass 7 verbundene Bewässerungsmittel, wobei die verstellbare Halterung 2 mindestens einen in der Länge verstellbaren Haltearm aufweist, der ausgebildet ist, um auf der Oberseite des Grabsteins 6 aufzuliegen.

## Beschreibung

### Hintergrund der Erfindung

Die Anmeldung betrifft ein Bewässerungssystem für Grabstätten. Oft sind solche Grabstätten mit Pflanzen geschmückt, die regelmäßig von Angehörigen des oder der Verstorbenen gegossen werden müssen, was gerade in den Sommermonaten einigen Aufwand bedeuten kann. Das manuelle Bewässern von Gräbern mit einer Gießkanne ist umständlich und aufwändig.

Bekannt sind Pflanzschalen mit integriertem Wasserbehältnis, um die dort eingesetzten Pflanzen mit Wasser zu versorgen. Diese Lösung ist jedoch auf kleinere Pflanzflächen und einen geringen Wasservorrat beschränkt. Solche Grabschalen mit Wasserspeichern ermöglichen jedoch keine komplette Grabstätte mit Wasser zu versorgen, sondern lediglich Pflanzen in einzelnen Behältern.

### Zusammenfassung der Erfindung

Ein Ziel der beschriebenen Erfindung ist es, ein einfaches Bewässerungssystem für Grabstätten zu schaffen, das nicht nur Pflanzschalen, sondern ganze Grabstätten mit Wasser versorgt und dabei prinzipiell ohne eine Energieversorgung zum Betreiben von Pumpen auskommt.

Die Erfindung sieht im Allgemeinen ein automatisches Bewässerungssystem für Gräber vor, welches sich zum Beispiel auf der Rückseite eines Grabsteines in Form eines Flüssigkeitsbehälters (Tank) befestigen lässt, der u.a. vom Regen wieder aufgefüllt werden kann. Zudem ist die Gestaltung so gehalten, dass der Tank kaum auffällt und sich nahezu unsichtbar in den Friedhof einfügt. Über einen Schlauch kann die Pflanzfläche des eigentlichen Grabs unterirdisch oder auf der Erde aufliegend per Tröpfchenbewässerung oder durch Direktbewässerung mittels eines Bewässerungsautomaten mit Flüssigkeit versorgt werden.

Die Anmeldung beschreibt unter anderem ein effizientes System zur Bewässerung von Grabstätten, aufweisend einen Tank mit einer Einfüllöffnung und einem Auslass, eine in der Länge verstellbare Halterung zur Befestigung des Tanks an einer ersten Seite eines Grabsteins und mit dem Auslass verbundene Bewässerungsmittel. Durch die verstellbare Halterung kann der Tank nachträglich einfach an dem Grabstein befestigt werden, ohne dass hierfür Anpassungen wie Bohrungen oder Aussparungen am Grabstein erforderlich sind. Die Verstellbarkeit kann die vertikale Lage des Tanks (d.h. die Höhe des Tanks in Bezug auf den Grabstein) umfassen, um den Tank an Grabsteinen unterschiedlicher Höhe anzubringen. Die Verstellbarkeit der Halterung kann auch die Stärke (Dicke) des Grabsteins betreffen, um den Tank an Grabsteinen unterschiedlicher Dicke zu befestigen. Die verstellbare Halterung ermöglicht so die Befestigung des Tanks an Grabsteinen unterschiedlicher Größe und Form. Diese weisen zumeist mindestens eine senkrechte Fläche auf, an die (als erste Seite des Grabsteins bezeichnet) der Tank mit einer ebenfalls senkrechten Seitenfläche angebracht wird. Die weiteren Seitenflächen des Grabsteins sowie des Tanks brauchen nicht zwingend senkrecht zu sein. Oft besteht ein Grabstein jedoch aus einer Platte mit zwei parallelen, senkrechten Flächen (als erste und zweite Seite bezeichnet) und auch der Tank weist zwei parallele, senkrechte Seitenflächen auf. Der Abstand zwischen den beiden Seiten des Grabsteins wird als seine Dicke oder Stärke bezeichnet. Der Tank kann sowohl an der Seite des Grabsteins angebracht werden, die der Pflanzfläche des Grabes zugewandt ist, als auch an der gegenüberliegenden Seite.

Der Tank kann mit Wasser oder einer anderen Flüssigkeit zur Bewässerung der Pflanzfläche gefüllt werden, die anschließend über einen längeren Zeitraum von den Bewässerungsmitteln an die Pflanzung oder die Erde der Grabstätte abgegeben wird. Üblicherweise sind Grabsteine relativ groß, so dass es möglich ist einen Tank mit einem ausreichenden Volumen daran zu befestigen, um eine Bewässerung über einen längeren Zeitraum zu ermöglichen. Die Form des Tanks kann rechteckig oder andersartig sein, z.B. an die üblichen Formen von Grabsteinen angepasst. Der Tank kann in Bezug zu seinen anderweitigen Ausdehnungen relativ flach ausgebildet sein (plattenförmig), um in Richtung der Stärke/Dicke des Grabsteins nicht zu viel Platz einzunehmen.

Unterschiedlichste Arten von Bewässerungsmittel können mit dem Tankauslass verbunden werden, um die Flüssigkeit kontrolliert über die Pflanzfläche der Grabstätte abzugeben. Die Abgabe kann kontinuierlich, zum Beispiel in Form einer Folge von Tröpfchen, oder diskret zu bestimmten Zeitpunkten erfolgen. In Ausführungsbeispielen erfolgt die Bewässerung mittels eines Batterie- oder Solarbetriebenen Bewässerungsautomaten, der Zeitpunkt und/oder Menge an abgegebener Bewässerungsflüssigkeit regelt. Die Bewässerungsflüssigkeit kann direkt auf die Pflanzen oder in die Erde der Pflanzfläche abgegeben werden.

Die verstellbare Halterung weist mindestens einen verstellbaren Haltearm auf, der ausgebildet ist, um auf der Oberseite des Grabsteins aufzuliegen und so den Tank zu tragen und am Grabstein zu halten. Dabei trägt der mindestens eine Haltearm zumindest teilweise das Gewicht des Tanks (auch befüllt) und lastet dieses auf der Oberseite des Grabsteins auf. Die Oberseite des Grabsteins ist vorzugsweise annähernd horizontal oder weist zumindest eine horizontale oder schiefe Fläche (z.B. in Form einer schiefen oder gewölbten Ebene) auf, um die Last aufzunehmen. Zumeist weist die Grabsteinoberseite zumindest in einer Richtung eine horizontale Ausdehnung auf, auf die ein horizontaler Abschnitt des Haltearms flächig aufliegen kann. Der horizontale Abschnitt kann in seiner Länge verstellbar sein, um ihn an die Dicke des Grabsteins anzupassen. In Ausführungsformen sind zwei verstellbare Haltearme vorgesehen, um die Halterung an die unterschiedlichsten Formen von Grabsteinen, die oftmals keine vollständig horizontale Oberfläche aufweisen, anzupassen.

Der verstellbare Haltearm kann vertikal verstellbar sein, um den Tank in unterschiedlicher Höhe in Bezug auf die Oberseite des Grabsteins anzubringen beziehungsweise um unterschiedliche Abstände zwischen Tankoberkante und Grabsteinoberseite zu ermöglichen. Hierzu kann der verstellbare Haltearm einen vertikalen Abschnitt aufweisen, der in seiner Länge verstellbar ist. Gerade bei nichtrechteckigen Grabsteinen kann durch den zumindest einen verstellbaren Haltearm eine horizontale Ausrichtung der Tankoberseite erfolgen. Es ist möglich, dass mehrere Haltearme vorgesehen sind, von denen zumindest einer in der Höhe verstellbar ist, um eine Befestigung des Tanks an einem Grabstein mit einer nicht-horizontal ebenen Oberseite zu ermöglichen. Bevorzugt sind zwei verstellbare Haltearme zur Anpassung der Halterung an die Form des Grabsteins vorgesehen. Zusätzlich können ein oder mehrere seitliche Halterungen am Grabstein vorgesehen sein, die zum Beispiel den Grabstein seitlich umgreifen, um ein seitliches Wegkippen des Tanks zu verhindern, was besonders bei unregelmäßig geformten Grabsteinen von Vorteil ist. Zur Vereinfachung der Ausrichtung des Tanks kann dort eine Wasserwaage angebracht sein, die beispielsweise in Form eines mit Flüssigkeit gefüllten Glasröhrchens auf der Tankoberseite vorgesehen ist.

Zusätzlich kann der Tank an seiner Unterseite auf der Erde, auf einem Absatz oder einer horizontalen Fläche des Grabsteins oder auf einem anderen Gegenstand aufsitzen, wodurch ein Teil des Gewichts insbesondere des gefüllten Tanks aufgenommen wird. Die Halterung dient in diesem Fall hauptsächlich einer Fixierung des Tanks am Grabstein, um zum Beispiel ein Umfallen zu verhindern, ohne einen Großteil der Last zu tragen. Optional können auch zusätzlich verstellbare Füße an der Unterseite des Tanks vorgesehen werden, um den Tank am Boden abzustützen. Die verstellbaren Füße können eine Gewindestange aufweisen, die in ein Innengewinde im Tank eingreift. Durch Verdrehen der Gewindestange kann so die Höhe der Füße eingestellt werden. Durch eine Kontermutter kann die gewünschte Position gesichert werden. Insbesondere bei kleineren Tanks muss die Unterseite des Tanks nicht aufliegen und seine gesamte Gewichtslast wird von der Halterung getragen.

In Ausführungsbeispielen ist der verstellbare Haltearm im Wesentlichen L-förmig ausgebildet, wobei der erste Schenkel des Haltearms verstellbar am Tank befestigt ist und der zweite Schenkel ausgebildet ist, um auf dem Grabstein aufzuliegen. Der erste Schenkel kann dem oben genannten vertikalen Abschnitt entsprechen und der zweite Schenkel kann dem oben genannten horizontalen Abschnitt entsprechen. Der Winkel zwischen dem ersten und zweiten Schenkel beträgt üblicherweise 90 Grad. Meist (aber nicht zwingend) ist der erste, am Tank verstellbar befestigte Schenkel länger als der zweite, am Grabstein aufliegende Schenkel. Es ist möglich, dass der Tank eine Führungsnut zur Aufnahme des ersten Schenkels hat, um diesen sicher zu befestigen und bei der Verstellung zum Zwecke der Justierung zu führen.

Der verstellbare Haltearm kann einen horizontal verstellbaren Haltewinkel aufweisen, um den Grabstein an seiner zweiten, der ersten Seite gegenüberliegenden Seite zu umgreifen. Mittels des horizontal verstellbaren Haltewinkels kann der Haltearm an unterschiedlichen Dicken des Grabsteins angepasst werden. In dieser Ausgestaltung hat der Haltearm die Form eines U mit einem kurzen dritten Schenkel, der durch den Haltewinkel gebildet wird und im Wesentlichen parallel zu dem ersten Schenkel ist. Der Haltearm umgreift in dieser Ausgestaltung die Oberseite des Grabsteins und hält den Tank fest am Grabstein, wobei ein Abrutschen der Halterung durch den Haltewinkel verhindert wird. Durch die horizontale Verstellmöglichkeit wird der Abstand zwischen erstem und drittem Schenkel an die Dicke des jeweiligen Grabsteins angepasst. Während der erste und zweite Schenkel als Rechteckprofile ausgebildet sein können, ist es möglich den dritten Schenkel mehr plattenförmig zu gestalten, um eine größere Anlagefläche an der zweiten Grabsteinseite zu ermöglichen.

Die horizontale und/oder vertikale Verstellmöglichkeit des Haltearms kann auf vielfältige Weise erfolgen. Zum Beispiel kann der erste Schenkel in einer Führungsschiene oder Führungsnut des Tanks aufgenommen sein und in verschiedenen vertikalen Positionen dort arretiert werden. Die Arretierung ist mittel formschlüssiger Verbindungen wie Haken, Ösen, Abstufungen oder dergleichen möglich. Zum Beispiel kann eine Reihe von Löchern im ersten Schenkel vorgesehen sein, durch die Schrauben in entsprechende Bohrungen im Tank geführt werden. Alternativ oder zusätzlich kann eine reibschlüssige Verbindung vorgesehen sein, durch die der erste Schenkel in der Führungsnut geklemmt wird. In einer Ausgestaltung ist zumindest ein Langloch im Haltearm vorgesehen, durch das ein Befestigungsmittel (z.B. eine Schraube oder eine Klemmvorrichtung) greift, um die horizontale und/oder vertikale Verstellbarkeit des Haltearms zu Ermöglichen. Zum Beispiel kann ein Langloch im ersten Schenkel des Haltearms vorgesehen sein, um den Haltearm vertikal bezüglich des Tanks in der Höhe zu verstellen. Alternativ kann das Langloch auch in einer Führungsschiene des Tanks vorgesehen sein. Eine Schraube kann dann durch eine Bohrung im Haltearm und das Langloch greifen, um hinter dem Langloch in einer Mutter eingedreht zu werden. Durch Festziehen der Schraube wird der Haltearm in der gewünschten vertikalen Position am Tank befestigt. Alternativ kann auch eine Klemmvorrichtung durch das Langloch greifen und Haltearm und Tank fixieren. Selbstverständlich gilt das oben Gesagte bezüglich form- und/oder reibschlüssiger Verbindung auch für die Verbindung zwischen zweitem Schenkel des Haltearms und Haltewinkel (dritter Schenkel). Auch diese Verbindung kann auf verschiedene Weise horizontal verstellbar ausgestaltet sein, zum Beispiel mittels eines Langlochs im zweitem Schenkel und einer hierdurch greifenden Schraubverbindung oder Klemmvorrichtung.

In Ausführungsbeispielen ist der verstellbare Haltearm zweiteilig ausgebildet und jeder Teil weist einen abgewinkelten Abschnitt auf, der sich im Wesentlichen senkrecht zur Grabsteinoberseite nach oben erstreckt. Die horizontale Verstellung des Haltearms kann durch relative Verschiebung der beiden Teile des Haltearms zueinander erfolgen. Hierzu kann eine Schraubverbindung durch die beiden abgewinkelten Abschnitte geführt werden und diese mittels eines Anziehens der Schraubverbindung aufeinander zubewegt werden.

In Ausführungsbeispielen weist der verstellbare Haltearm einen U-förmigen Abschnitt auf. Ein Schenkel des U-förmigen Abschnitts kann dem oben genannten vertikalen Abschnitt entsprechen. Der Tank kann durch den U-förmigen Abschnitt gehalten werden. Zum Beispiel ist der Tank zumindest teilweise in dem U-förmigen Abschnitt angeordnet. So kann der Tank auf dem unteren Teil des U-förmigen Abschnitts aufliegen und von diesem getragen werden. Um ein Wegkippen des Tanks zu verhindern, kann dieser weiter oben am Haltearm (z.B. an dem vertikalen Abschnitt) zusätzlich befestigt werden, beispielsweise mittels einer Schraubverbindung.

In Ausführungsbeispielen weist das Bewässerungsmittel einen perforierten Bewässerungsschlauch auf, der mit dem Auslass des Tanks verbunden ist und in der Pflanzfläche der Grabstätte verlegt werden kann. Die Verbindung zum Tankauslass kann durch einen weiteren, nicht-perforierten Schlauch erfolgen, was besonders dann von Vorteil ist, wenn der Tank auf der dem Pflanzfeld gegenüberliegenden Seite des Grabsteins angebracht ist. Durch den perforierten Bewässerungsschlauch (auch Tröpfchenschlauch genannt) können Tröpfchen der Bewässerungsflüssigkeit (z.B. Wasser mit oder ohne Zusätze) austreten und die Pflanzen bewässern. Alternativ und/oder zusätzlich kann das Bewässerungsmittel Tropfspitzen aufweisen, die mittels eines Schlauchs mit dem Auslass verbunden sind und in die Pflanzfläche der Grabstätte eingesteckt werden können. Die Tropfspitzen können beispielsweise aus porösem Ton bestehen, durch das kontinuierlich eine geringe Wassermenge hindurchtritt. Andere Möglichkeiten zur Verteilung der Bewässerungsflüssigkeit auf der Pflanzfläche sind auch möglich. In jedem Fall wird das Bewässerungsmittel über einen längeren Zeitraum mit der Flüssigkeit aus dem Tank versorgt und ermöglicht das Bewässern der Grabstätte ohne manuelle Gießarbeit.

Die Dosierung der austretenden Bewässerungsflüssigkeit kann bereits durch die Gestaltung des Bewässerungsmittels erfolgen, zum Beispiel durch die Lochgröße der Perforation, die Anzahl an Löchern, der Länge des Bewässerungsschlauchs, oder die Anzahl und Gestaltung der Tropfspitzen. Es ist jedoch auch möglich, ein zusätzliches, mit dem Tankauslass verbundenes Dosiermittel zur Steuerung der den Tank verlassenden Durchflussmenge vorzusehen. Beispielsweise kann ein mechanisches Dosierventil zur Regulierung der Durchflussmenge vorgesehen sein. Es ist auch möglich ein zeitgeschaltetes oder bodenfeuchtegeschaltetes Dosierventil am Tankauslass anzubringen und die Bewässerung auf bestimmte Zeiten (z.B. nachts) oder bei Bedarf (trockener Boden mittels Bodenfeuchtesensor erfasst) zu beschränken. Eine weitere Variante sieht einen Regensensor vor. Stellt dieser einen Niederschlag fest, wird die Bewässerung unterbrochen oder eine Bewässerungsperiode ausgelassen.

Um die Kapazität des Bewässerungssystems zu erhöhen, kann ein mit dem Einlass verbundener Trichteraufsatz zur Selbstbefüllung des Tanks bei Regen herangezogen werden. Der Trichteraufsatz bedeckt eine möglichst große horizontale Fläche, um viel Regenwasser zu sammeln, wodurch die Notwendigkeit für das manuelle Nachfüllen des Tanks verringert werden kann. Der Trichteraufsatz kann aufsteckbar gestaltet sein, um bei Nichtbedarf abgenommen zu werden. Der Trichteraufsatz und/oder der Tank kann/können ein Sieb zum Schutz gegen einfallendes Laub aufweisen. Weiterhin kann ein Überlauf vorgesehen sein, der nach einem vollständigen Befüllen des Tanks überschüssiges Wasser ableitet. Der Überlauf kann das Überschusswasser zum Beispiel mittels eines Schlauchs ableiten und so eine Überschwemmung des Grabes durch Regenwasser vermeiden.

Das oben beschriebene Bewässerungssystem kann ferner mit einer Ablassöffnung zum Entleeren des Tanks versehen sein, um beispielsweise im Winter das Wassere abzulassen. Die Ablassöffnung kann mit einer Ablassschraube oder einem Stopfen verschlossen werden.

Weiterhin kann eine Wasserstandsanzeige am Tank angebracht sein, um dem Benutzer zu signalisieren, wann die Bewässerungsflüssigkeit nachgefüllt werden sollte. Die Wasserstandsanzeige signalisiert den Füllstand des Tanks und kann mittels eines Schauglases oder eines Schwimmers realisiert werden.

Die oben beschriebenen Aspekte können in vieler Weise miteinander kombiniert werden und die offenbarte Erfindung ist nicht auf die im Folgenden ausführlich erläuterten Ausführungsbeispiele begrenzt. Weitere Vorteile, Variationen und Verwendungszwecke ergeben sich für den Fachmann aus der vorliegenden Beschreibung.

### Kurze Beschreibung der Figuren

Figur 1 zeigt ein Ausführungsbeispiel eines Grabbewässerungssystems in verschiedenen Ansichten.
Figur 2 zeigt ein Ausführungsbeispiel eines Grabbewässerungssystems in perspektivischen Ansichten.
Figur 3 zeigt das Bewässerungssystem der Figur 1 von oben.
Figur 4 zeigt ein Ausführungsbeispiel eines Grabbewässerungssystems in verschiedenen Ansichten.
Figur 5 zeigt ein Ausführungsbeispiel eines Grabbewässerungssystems in perspektivischen Ansichten.
Figuren 6A, 6B zeigen ein Ausführungsbeispiel eines Grabbewässerungssystems in verschiedenen Ansichten.

### Ausführliche Beschreibung von Ausführungsbeispielen

Bei der beschriebenen Erfindung handelt es sich um ein effizientes Bewässerungssystem für Grabstätten. Dieses kann nahtlos und ästhetisch auf der Rückseite des Grabsteins angeordnet werden. Religiöse Motive können am Tank des Bewässerungssystems angebracht sein und die Rückseite der Grabstätte schmücken. Es handelt sich um einen leicht montierbaren Wassertank, der für eine permanente, regelbare Wasserzufuhr sorgt und der sich bei Regen dank eines optionalen Trichteraufsatzes selbst befüllt. Die sowohl in der Stärke des Grabsteines als auch in der Höhe einzeln verstellbaren Halterungen ermöglichen einen Einsatz mit nahezu allen gängigen Grabsteinen. Der Tank wird mittels einer Hucke-Pack-Befestigung am Grabstein angebracht, ohne dass Bohrungen im Grabstein erforderlich sind.

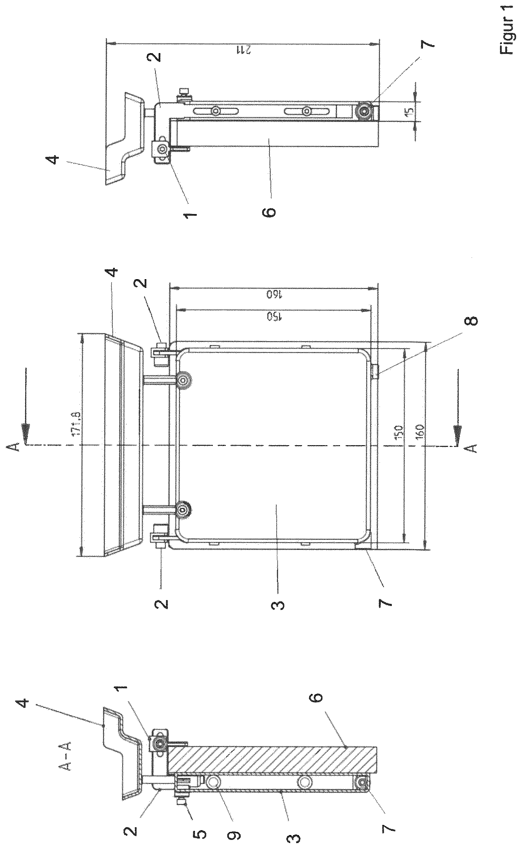

Figur 1 zeigt ein Ausführungsbeispiel eines Grabbewässerungssystems in verschiedenen Ansichten. Man sieht in der Mitte eine Draufsicht des Bewässerungssystems mit einem Tank 3, einer verstellbaren Halterung 2 und einem Trichteraufsatz 4. Der Trichteraufsatz 4 ist an zwei Stellen mit Rohrverbindungen an den Einlassöffnungen des Tanks 3 verbunden, so dass aufgesammeltes oder eingefülltes Wasser in den Tank fließen kann. Der Trichteraufsatz wird von oben in die zwei Einlassöffnungen des Tanks eingeführt und dort mittels der Schrauben 5 befestigt, welche die Rohrverbindungen des Trichteraufsatzes 4 festklemmen. Der Trichteraufsatz kann auch anderweitig am Tank oder an den Haltearmen angebracht werden. Die Halterung 2 besteht in diesem Beispiel aus zwei verstellbaren Haltearmen, die am Tank seitlich in Vertiefungen geführt sind.

Die angegebene Maße sind nur Beispiele für eine mögliche Gestaltung und sollen die Offenbarung des Ausführungsbeispiels nicht beschränken. Selbstverständlich ist die Zeichnung in einem bestimmten Maßstab ausgeführt. Das Bewässerungssystem kann in verschiedenen Größen ausgeführt sein und dabei zum Beispiel an die Größe eines Grabsteins angelehnt sein und in etwa dessen Maße übernehmen. Auf diese Weise können Tanks mit einem relativ großen Volumen, die optisch an die Gestaltung der Grabstätte angepasst sind, erzielt werden.

Weiterhin erkennt man in der Figur eine mit einem Stopfen oder einer Ablassschraube verschließbare Ablassöffnung 8, mit der das Wasser im Tank 3 bei Bedarf abgelassen werden kann. Das Wasser im Tank kann über einen eventuell regelbaren Auslass 7 den Bewässerungsmitteln (nicht gezeigt) zugeführt werden, die dieses dann verteilen und die Pflanzung der Grabstätte bewässern. Als Bewässerungsmittels kann beispielsweise ein Tropfschlauch am Auslass 7 mittels einer Schlauchkupplung angebracht werden. Ein Bewässerungsautomat kann den Zeitpunkt und/oder die Menge des abgegebenen Wassers regeln.

Die linke Ansicht zeigt den Schnitt A-A durch den Tank 3, den Grabstein 6 und den Trichteraufsatz 4. Der Tank 3 liegt in diesem Beispiel flächig an der ersten Seite des Grabsteins 6 an, was jedoch nicht immer der Fall sein muss. Man erkennt außerdem die Halterung 2 mit dem zweiten Schenkel des Haltearms, der oben auf dem Grabstein 6 aufliegt. Weiterhin gezeigt ist der horizontal verstellbare Haltewinkel 1, der den Grabstein 6 an seiner zweiten Seite umgreift. Der horizontal verstellbare Haltewinkel 1 (dritter Schenkel des Haltearms) ist mittels einer Schraubverbindung, die durch ein Langloch im zweiten Schenkel greift, verschiebbar und kann an verschiedenen Positionen durch Anziehen der Schraubverbindung arretiert werden, um die Halterung so an die jeweilige Stärke des Grabsteins anzupassen..

Die Ansicht rechts in der Figur zeigt eine Ansicht des Bewässerungssystems von links, wobei der linke Haltearm 2 und die Auslassöffnung 7 deutlich zu erkennen sind. Der Haltearm 2 besteht aus einem ersten Schenkel, der in einer Vertiefung oder Nut im Tank angeordnet ist, und einem rechtwinklig dazu angeordneten, zweiten Schenkel. In dem gezeigten Beispiel sind die beiden Schenkel einstückig ausgebildet. Der horizontal verstellbare Haltewinkel 1 bildet den dritten Schenkel des Haltearms. Der erste Schenkel des Haltearms 2 ist mittels Zylinderschrauben am Tank befestigt.

Wie bereits erläutert, kann der horizontal verstellbare Haltewinkel 1 durch Verschieben in einem Langloch des zweiten Schenkels des Haltearms verstellt werden, um die Halterung an die Stärke des Grabsteins 6 anzupassen. Die vertikale Verstellung der Halterung 2 erfolgt ebenfalls über zwei Schrauben, die in entsprechenden Langlöchern des ersten Schenkels verschiebbar sind. Durch ein Anziehen der Schrauben, die in entsprechende Gewindebohrungen 9 im Tank eingreifen, kann die Höhe der Halterung (bzw. des zweiten Haltearmschenkels, der auf der Oberseite des Grabsteins aufliegt) eingestellt und das Bewässerungssystem an die Form und Maße des Grabsteins angepasst werden. In dem gezeigten Beispiel sind zwei verstellbare Haltearme 2 vorgesehen, so dass das Bewässerungssystem auch an Grabsteinen angebracht werden kann, die keine horizontale Oberseite aufweisen. Durch das Einstellen von verschiedenen Höhen an den beiden Haltearmen kann der Tank 3 waagrecht positioniert werden, wobei die beiden Haltearme in unterschiedlicher Höhe auf dem Grabstein 6 aufliegen.

Die Form des Trichters 4 in dem Ausführungsbeispiel ist so gewählt, dass er den Grabstein in dem abgestuften Bereich teilweise überragt. So kann die Trichterfläche vergrößert werden und mehr Regenwasser gesammelt. Der Trichter kann aber auch anders gestaltet und ohne Abstufung ausgebildet sein.

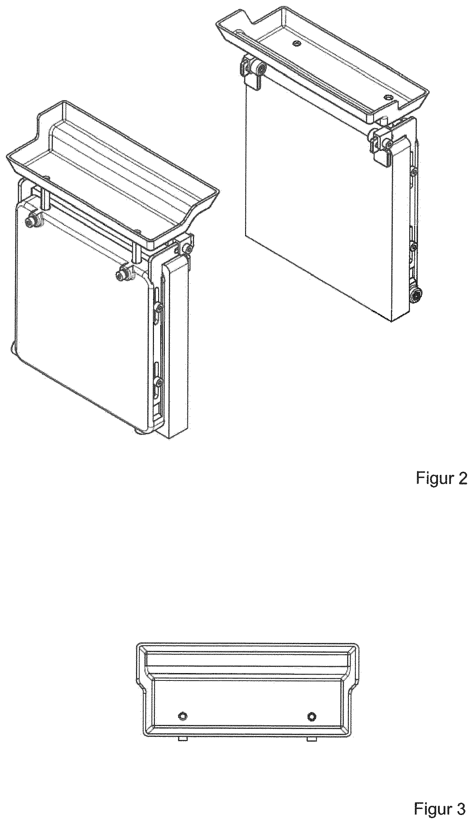

Figur 2 zeigt ein Ausführungsbeispiel eines Grabbewässerungssystems in zwei perspektivischen Ansichten. Man erkennt das Bewässerungssystem mit einem Tank, einer verstellbaren Halterung und einem Trichteraufsatz, sowie weitere oben beschriebene Merkmale. Der Tank ist mittels der verstellbaren Halterung an der ersten Seite eines Grabsteins angebracht, ohne dass dieser hierzu beschädigt oder angebohrt werden muss. Man sieht wie die Haltearme oben auf dem Grabstein aufliegen und so die Last des Tanks und der Befüllung tragen. Die verstellbare Halterung hat weiterhin einen horizontal verschiebbaren Haltewinkel, der den Grabstein an seiner zweiten Seite umgreift und den Tank so festhält.

Am Tankauslass kann zum Beispiel ein Tropfschlauch angeschlossen werden, der in der Pflanzfläche des Grabes verlegt ist und dort langsam das Wasser aus dem Tank zur Bewässerung entleert. Andere Bewässerungsmittel, wie zum Beispiel Tropfspitzen, können ebenfalls verwendet werden. Weitere optionale Merkmale des Bewässerungssystems werden unten genannt.

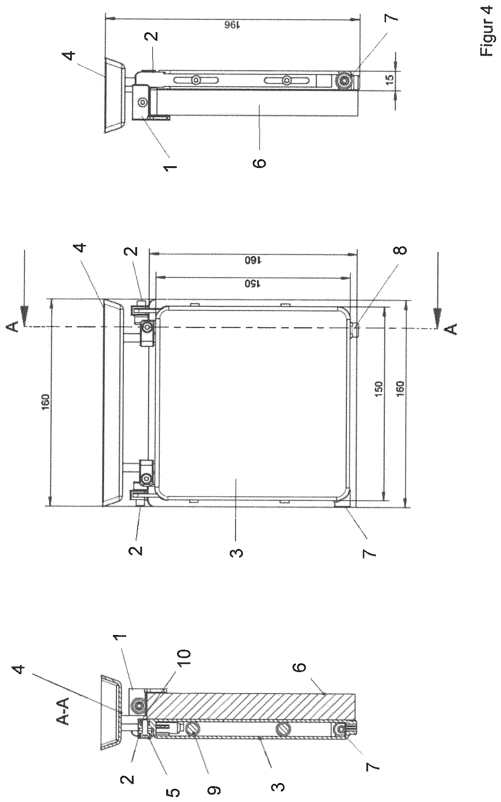

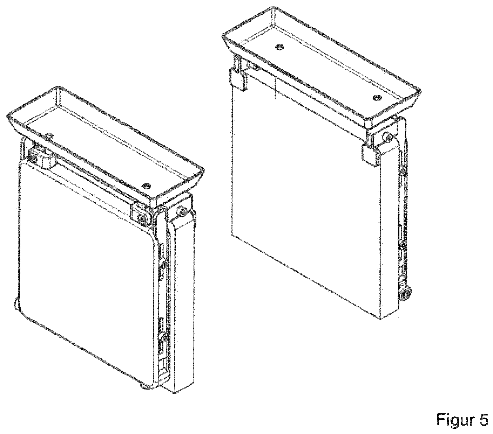

Figur 3 zeigt das Bewässerungssystem der Figur 1 von oben, wobei im Wesentlichen der Trichteraufsatz zu sehen ist. Man erkennt die beiden Öffnungen, die über Rohrverbindungen mit den Einlassöffnungen des Tanks verbunden sind. Das eingefüllte oder gesammelte Wasser kann so in den Tank abfließen und diesen befüllen. Ein häufiges manuelles Nachfüllen ist nicht erforderlich. Der dargestellte Trichter ist abgestuft, wie in Figuren 1 und 2 gezeigt. Er kann jedoch auch ohne Abstufung in Form einer einfachen Wanne ausgeführt sein, wie in den Figuren 4 und 5 gezeigt.

Figur 4 zeigt ein Ausführungsbeispiel eines Grabbewässerungssystems in verschiedenen Ansichten. Gleiche Bezugszeichen beziehen sich auf gleiche Elemente wie im vorherigen Ausführungsbeispiel. In dem in Figur 4 gezeigten Bewässerungssystem wird ein flacher Trichter 4 ohne Abstufung verwendet, der ebenfalls den Tank 3 und den Grabstein 6 überragt. Er wird in Öffnungen in der Oberseite des Tanks 3 eingeführt; jedoch ist die Befestigung des Trichters mittels der Schrauben 5 anders ausgeführt. Die Schrauben 5 in diesem Ausführungsbeispiel greifen jeweils durch ein Klemmstück und ziehen dieses bei Festdrehen der Schrauben zusammen. Hierzu ist jeweils eine Sechskantmutter 10 auf der gegenüberliegenden Seite des Klemmstücks verdrehsicher vorgesehen, in das eine Zylinderschraube eingedreht werden kann. Die Rohrverbindungen des Trichters 4 sind in die Klemmstücke eingeführt und werden dort durch Zuziehen des Klemmstückes mittels der Schrauben 5 fest gehalten.

Die Ansicht rechts in der Figur zeigt eine Ansicht des Bewässerungssystems von links, wobei der linke Haltearm 2 und der horizontal verstellbare Haltewinkel 1 gut zu erkennen sind. Der Haltearm 2 besteht wieder aus einem ersten Schenkel mit zwei vertikalen Langlöchern. Der erste vertikale Schenkel des Haltearms 2 ist in einer Vertiefung oder Nut im Tank angeordnet und weist einen rechtwinklig dazu angeordneten zweiten Schenkel auf. Der horizontal verstellbare Haltewinkel 1 umgreift den zweiten Schenkel an drei Seiten, ähnlich einer Hülse, (es ist auch eine andere Gestaltung, zum Beispiel eine vierseitige Umfassung möglich) und wird mittels einer Schraube fixiert. Die Schraube kann, wie zuvor beschrieben, durch ein Langloch im zweiten Schenkel hindurchgehen und in ein Gewinde auf der anderen Seite des Haltewinkels eindrehen. Es ist jedoch auch möglich, auf das Langloch zu verzichten, wenn die Schraube zum Beispiel eine Klemmverbindung mit dem zweiten Schenkel bildet. In diesem Fall geht die Schraube durch ein Gewinde im Haltewinkel und wird durch Festdrehen gegen den zweiten Schenkel des Haltearms gepresst, um eine horizontale Lagefixierung des Haltewinkels am zweiten Schenkel des Haltearms zu erzielen. Andere verstellbare Fixierungen sind für die horizontal und/oder vertikale Verstellmöglichkeit des Haltearms möglich, insbesondere solche, die auf einem Reibschluss oder einem Formschluss basieren. Selbstverständlich kann der rechte Haltearm 2 genauso gestaltet werden.

Figur 5 zeigt das Ausführungsbeispiel von Figur 4 in perspektivischen Ansichten. Man erkennt den flach ausgeführten Trichter ohne Abstufung und den horizontal verstellbaren Haltewinkel, der den zweiten Schenkel des Haltearms umschließt.

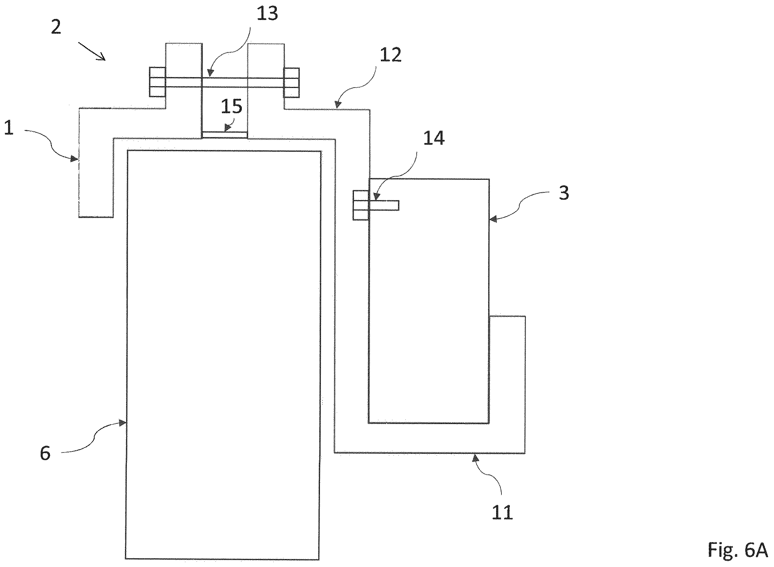

Figur 6A zeigt ein weiteres Ausführungsbeispiel des Bewässerungssystems in einer Seitenansicht. Die verstellbare Halterung 2 ist zweiteilig und weist einen ersten Abschnitt auf, der einen horizontalen Abschnitt und einen Haltewinkel 1 besitzt, welcher den Grabstein 6 auf einer Seite umgreift. Ein zweiter Abschnitt 12 der verstellbaren Halterung 2 weist einen oberen horizontalen Abschnitt und einen U-förmigen Abschnitt 11 auf. Die beiden horizontalen Abschnitte liegen auf der Oberseite des Grabsteins 6 auf und besitzen zusätzliche Winkelteile, die sich nach oben erstrecken. Mittels eines Befestigungsmittels, z.B. einer Schraubverbindung 13, die durch entsprechende Öffnungen in den Winkelteilen geführt ist, können die beiden horizontalen Abschnitte der verstellbaren Halterung 2 aufeinander zu bzw. zusammengeführt werden. Durch Anziehen der Schraube werden die Winkelteile relativ zueinander bewegt, bis der eine Schenkel des U-förmigen Abschnitts 12 am Grabstein anliegt. Auf diese Weise wird die verstellbare Halterung 2 an die Dicke des Grabsteins angepasst. Durch weiteres Anziehen der Schraube 13 kann die verstellbare Halterung 2 fest am Grabstein 6 angebracht werden. Auf der anderen Seite des Grabsteins wird der Haltewinkel durch das Anziehen der Schraube gegen den Grabstein gedrückt, so dass von beiden Seiten eine Haltekraft auf den Grabstein aufgebracht wird, welche das Bewässerungssystem am Grabstein fixiert. Anstatt der Schraube können auch andere Spannmittel verwendet werden, welche die beiden Winkelteile relativ zueinander bewegen und eine Spannkraft auf diese aufbringen, um die verstellbare Halterung 2 fest am Grabstein 6 zu befestigen. In Ausführungsformen der Erfindung sind mindestens 2 solche voneinander beabstandete Halterungen 2 vorgesehen, um den Tank 3 am Grabstein 6 zu befestigen.

Wie aus Figur 6A ersichtlich, liegt der Tank 3 in dem U-förmigen Abschnitt 11 und wird von diesem getragen. Mit anderen Worten wird ein Teil des Tanks 3 von dem U-förmigen Abschnitt 11 umfasst und so gehalten. Der U-förmige Abschnitt kann so ausgestaltet sein, dass er den Abmessungen des Tanks ohne Spiel entspricht und diesen so fest hält. Alternativ oder zusätzlich kann der Tank 3 mittels eines Verbindungsmittels am oberen Teil des innenliegenden Schenkels des U-förmigen Abschnitts 11 befestigt werden, um ein Herauskippen des Tanks aus dem U-förmigen Abschnitt 11 zu verhindern. Dies kann beispielsweise mittels einer Schraubverbindung 14 erfolgen, die vorzugsweise so gestaltet ist, dass sie nicht nach innen, zum Tank hin, aus der Halterung heraussteht, also beispielsweise versenkt ist.

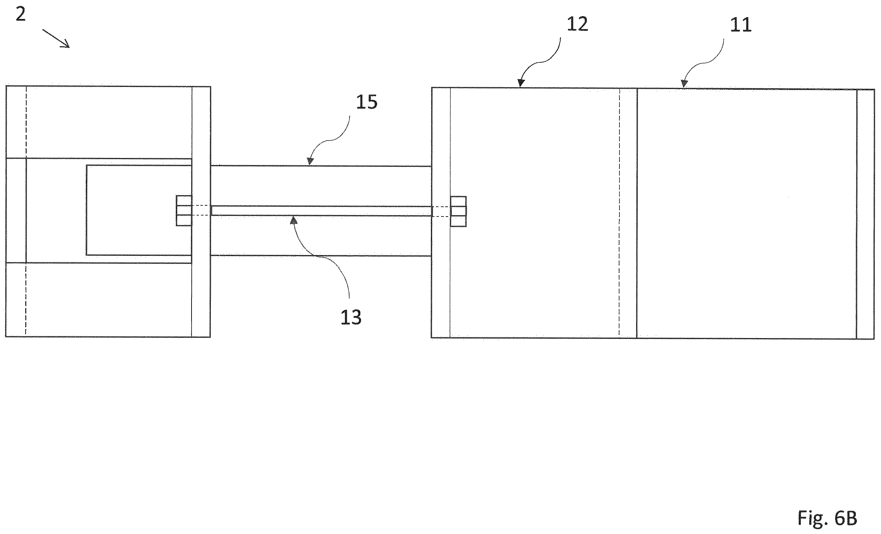

Figur 6B zeigt die verstellbare Halterung 2 des Bewässerungssystems von Fig. 6A in einer Draufsicht. Man erkennt einen hervorstehenden Steg 15 am oberen horizontalen Abschnitt 12 der verstellbaren Halterung 2, der in eine entsprechende Ausnehmung in dem anderen oberen horizontalen Abschnitt eingreift, um die Stabilität der Halterung zu erhöhen. Der Steg 15 führt beim Anziehen der Schraubverbindung 13 die beiden Abschnitte der Halterung und ermöglicht so eine kontrollierte möglichst lineare Verschiebung der beiden Abschnitte der Halterung zueinander. Insbesondere verhindert der Steg 15, dass beim Anziehen der Schraubverbindung 13 die senkrechten Winkelteile verkippen und sich die beiden Abschnitte der Halterung unten auseinander bewegen.

Das beschriebene Bewässerungssystem kann für fast alle gängigen Grabsteine (z.B. aus Marmor) verwendet werden und zeichnet sich durch eine sehr leichte Montage und Demontage aus. Die verstellbaren Halterungen können aus einem rostfreien Material wie Edelstahl oder aus verzinktem Metall gefertigt werden.

Der Tank kann aus Wetter- und UV beständigem Kunstsoff bestehen, verschieden Farbig gehalten sein und einen Aufdruck von religiösen oder kirchlichen Motiven tragen. Das Fassungsvermögen des Tanks kann beispielsweise zwischen 50 Liter und 100 Liter liegen, wodurch eine Bewässerung für einen längeren Zeitraum möglich ist. Der Wasserablauf des Tanks beziehungsweise Wasserzufuhr für die Bewässerung kann regelbar sein, um die Wassermenge für die Bewässerung der Bepflanzung und der Witterung anzupassen.

Zur Bewässerung kann ein Wetter- und UV beständiger Bewässerungsschlauch verwendet werden. Der Schlauch ist variabel verlegbar und veränderbar (je nach Bepflanzung), dadurch sind immer Grabungen oder Bohrungen im Grab möglich. Bei Bedarf kann der Schlauch neu im Grabfeld verlegt werden.

Optional kann ein verstellbarer Trichteraufsatz zur Selbstbefüllung bei Regen vorgesehen sein. Die Trichteröffnung kann mit einem ganzflächigen Sieb gegen Laubeinfall geschützt werden. Der Trichteraufsatz kann abnehmbar gestaltet werden.

Als weitere optionale Merkmale können eine Wasserablassschraube für eine Demontage im Winter und eine Wasserstandanzeige vorgesehen sein. Das Befüllen des Tanks kann manuell oder beispielsweise mittels einer akkubetriebenen Wasserpumpe erfolgen.

Die vorliegende Beschreibung erläutert das vorgeschlagene Grabbewässerungssystem anhand der Ausführungsbeispiele. Vielfältige Variationen sind jedoch möglich und für den Fachmann erkennbar. Die Erfindung ist jedoch nicht auf die Ausführungsbeispiele begrenzt und soll im Allgemeinen durch die beigefügten Patentansprüche definiert werden.

## Patentansprüche

1. System zur Bewässerung von Grabstätten, aufweisend:
einen Tank (3) mit einer Einfüllöffnung und einem Auslass (7),
eine verstellbare Halterung (2) zur Befestigung des Tanks (3) an einer ersten Seite eines Grabsteins (6) und
mit dem Auslass (7) verbundene Bewässerungsmittel,
wobei die verstellbare Halterung (2) mindestens einen in der Länge verstellbaren Haltearm aufweist, der ausgebildet ist, um auf der Oberseite des Grabsteins (6) aufzuliegen.

2. Bewässerungssystem nach Anspruch 1, wobei die verstellbare Halterung (2) den Grabstein (6) an einer zweiten, der ersten Seite gegenüberliegenden Seite umgreift.

3. Bewässerungssystem nach Anspruch 1 oder 2, wobei der verstellbare Haltearm vertikal in der Länge verstellbar ist, um den Tank (3) in unterschiedlicher Höhe in Bezug auf die Oberseite des Grabsteins (6) anzubringen.

4. Bewässerungssystem nach Anspruch 2 oder 3, wobei der verstellbare Haltearm im wesentlichen L-förmig ausgebildet ist, der erste Schenkel des Haltearms am Tank (3) befestigt ist und der zweite Schenkel ausgebildet ist, um auf dem Grabstein (6) aufzuliegen.

5. Bewässerungssystem nach Anspruch 4, wobei der Tank (3) eine Führungsnut zur Aufnahme des ersten Schenkels aufweist.

6. Bewässerungssystem nach einem der Ansprüche 1 bis 5, wobei der verstellbare Haltearm einen horizontal verstellbaren Haltewinkel aufweist, um den Grabstein (6) an der zweiten Seite zu umgreifen.

7. Bewässerungssystem nach einem der Ansprüche 1 bis 6, wobei der verstellbare Haltearm mindestens ein Langloch aufweist, durch das ein Befestigungsmittel greift, um die horizontale und/oder vertikale Verstellbarkeit des Haltearms zu ermöglichen.

8. Bewässerungssystem nach einem der Ansprüche 1 bis 7, wobei der verstellbare Haltearm einen U-förmigen Abschnitt aufweist und der Tank (3) durch den U-förmigen Abschnitt gehalten wird, insbesondere zumindest teilweise in dem U-förmigen Abschnitt angeordnet ist.

9. Bewässerungssystem nach einem der Ansprüche 1 bis 8, wobei der verstellbare Haltearm zweiteilig ausgebildet ist und jeder Teil einen abgewinkelten Abschnitt aufweist, der sich im Wesentlichen senkrecht zur Grabsteinoberseite nach oben erstreckt.

10. Bewässerungssystem nach einem der Ansprüche 1 bis 9, wobei das Bewässerungsmittel einen perforierten Bewässerungsschlauch aufweist, der mit dem Auslass verbunden ist und in der Pflanzfläche der Grabstätte verlegt werden kann.

11. Bewässerungssystem nach einem der Ansprüche 1 bis 9, wobei das Bewässerungsmittel Tropfspitzen aufweist, die mittels eines Schlauchs mit dem Auslass (7) verbunden sind und in die Pflanzfläche der Grabstätte eingesteckt werden können.

12. Bewässerungssystem nach einem der Ansprüche 1 bis 11, ferner mit einem mit dem Auslass (7) verbundenen Dosiermittel, insbesondere ein Dosierventil, zur Steuerung der den Tank verlassenden Durchflussmenge.

13. Bewässerungssystem nach einem der Ansprüche 1 bis 12, ferner mit einem mit dem Einlass verbundenen Trichteraufsatz (4) zur Selbstbefüllung des Tanks (3) bei Regen.

14. Bewässerungssystem nach einem der Ansprüche 1 bis 13, mit einem Sieb zum Schutz gegen einfallendes Laub.

15. Bewässerungssystem nach einem der Ansprüche 1 bis 14, ferner mit einer verschließbaren Ablassöffnung (8) zum Entleeren des Tanks und/oder mit einer Wasserstandanzeige.
